# EUROPÄISCHE PATENTANMELDUNG

(11) **EP 2 611 004 A2**
(43) Veröffentlichungstag der Anmeldung: **03.07.2013**
(21) Anmeldenummer: 12193131.5
(22) Anmeldetag: 19.11.2012
(51) Int. Cl.: H02K 5/22, H02K 11/00

(54) **Anschlusselement für ein Durchführungsbauelement und eine Verbindungsanordnung**

(30) Priorität: 29.12.2011 DE 102011090065
(71) Anmelder: ROBERT BOSCH GMBH, 70442 Stuttgart (DE)
(72) Erfinder: Geiger, Peter, 72800 Eningen (DE); Kupferer, Michael, 77866 Rheingau (DE); Jasch, Michael, 72793 Pfullingen (DE); Vogt, Richard, 77731 Willstaett (DE); Kopf, Frank, 77833 Ottersweier (DE)

(57) **Zusammenfassung**

Die Erfindung betrifft ein elektrisch leitendes Anschlusselement (8, 32) für ein Durchführungsbauelement (7, 36), insbesondere für einen Durchführungskondensator, umfassend:
- einen ersten Abschnitt (33, 81) zum Herstellen einer elektrischen Verbindung mit einer Zuleitung (6); und
- einen zweiten Abschnitt (35, 82), der mit dem ersten Abschnitt (33, 81) verbunden ist und zur Aufnahme des Durchführungsbauelements (7) ausgebildet ist, wobei der zweite Abschnitt (35, 82) einen bezüglich der Anordnungsrichtung des ersten und des zweiten Abschnitts (35, 82) einen sich ändernden Querschnitt aufweist, um mechanische Spannungen auf das Durchführungsbauelement zu verhindern, wenn dieses mit einer Innenumfangsfläche um den zweiten Abschnitt anliegt.

## Beschreibung

### Technisches Gebiet

Die vorliegende Erfindung betrifft das Kontaktieren von Elektromotoren, insbesondere das Kontaktieren und Aufnehmen von Durchführungsbauelementen zur Verwendung in einem Elektromotor.

### Stand der Technik

Die Anschlüsse für einen Elektromotor müssen möglichst motornah mit Entstörbauelementen, wie beispielsweise Entstörkondensatoren und/oder Entstördrosselspulen, versehen werden, um den Anforderungen an die elektromagnetische Verträglichkeit zu genügen. Die Entstörbauelemente umfassen Kondensatoren, die sowohl zwischen den Anschlüssen des Elektromotors als auch zwischen einem jeweiligen Anschluss und einem Massepotential, z. B. an einem Gehäuse des Elektromotors, geschaltet sind. Eine herkömmliche Weise, derartige Entstörbauelemente anzuschließen, besteht darin, diese durch Löten, Klemmen oder sonstige Verbindungstechniken mit den Verbindungsleitungen außerhalb oder innerhalb des Motorgehäuses zu verbinden.

Aufgrund ihrer EMV-Wirkung, insbesondere in den oberen Frequenz-Bereichen von z.B. bis 1,8 GHz und ihrer kompakten Aufbauweise werden immer häufiger Durchführungsbauelemente, insbesondere Durchführungskondensatoren, eingesetzt. Durchführungsbauelemente sind im Wesentlichen ringförmig bzw. torusförmig aufgebaut, wobei die Bauelementanschlüsse einer Innenumfangsfläche des Rings und einer Außenumfangsfläche des Rings entsprechen. Eine Verbindungsleitung wird durch das Durchführungsbauelement hindurch geführt, so dass diese den durch die Innenumfangsfläche gebildeten Bauelementanschluss elektrisch kontaktiert, wobei der durch die Außenumfangsfläche gebildete Bauelementanschluss mit dem Massepotential bzw. einem Gehäuse oder einer Abschirmung verbunden werden kann.

Ein Durchführungskondensator als Durchführungsbauelement ist in der Regel ein torusförmiger Keramikkondensator, der über die Zuleitungen einer elektrischen bzw. elektromechanischen Baugruppe geschoben und mit dieser elektrisch kontaktiert wird. Die Außenumfangsfläche des Durchführungskondensators wird elektrisch mit dem Gehäuse der Baugruppe, beispielsweise dem Motorgehäuse, verbunden. Die Zuleitung wird durch den Keramikkondensator geschoben und eine elektrische Verbindung zu einer Innenumfangsfläche hergestellt.

Bei direkter Kontaktierung mit der Zuleitung, beispielsweise durch Löten, ist die Gefahr einer Rissbildung in dem Keramikkörper des Durchführungskondensators sehr hoch, was zu einer Reduktion der Kapazität oder zum vollständigen Ausfall des Kondensatorbauelements führen kann. Die Ursache für die Rissbildung ist die geringe Zugfestigkeit des Durchführungskondensators in Verbindung mit den unterschiedlichen Wärmeausdehnungen von Kupfer und Keramikmaterial des Durchführungskondensators. Insbesondere beim Löten wurde erkannt, dass die Zugspannungen, die auf den Keramikkörper des Durchführungskondensators wirken, die zulässigen Zugspannungen durch nicht abgestimmte Prozesse bei weitem überschreiten können. Auch bei weiteren Fertigungsschritten einer Baugruppe, in der ein Durchführungskondensator oder ein sonstiges Durchführungsbauelement verwendet wird, können starke Temperaturgradienten auftreten, beispielsweise beim Umspritzen, beim Schweißen eines nah an dem Durchführungskondensator angeordneten Bauteils, bei hohen Umgebungstemperaturdifferenzen oder anderen Prozessen.

Es ist daher Aufgabe der vorliegenden Erfindung, Maßnahmen vorzusehen, durch die ein Durchführungsbauelement zuverlässig mit einer Zuleitung und/oder einem Gehäuse einer Baugruppe verbunden werden kann, ohne dass dabei die Gefahr einer Beschädigung des Durchführungsbauelements durch Montageprozesse oder durch zu hohe Zugspannungen, die von anderweitig bewirktem Temperaturstress verursacht werden, besteht.

### Offenbarung der Erfindung

Diese Aufgabe wird durch das Anschlusselement für ein Durchführungsbauelement gemäß Anspruch 1 sowie durch Anordnungen zum Anschluss eines Durchführungsbauelements, der Vorrichtung und der Verbindungsanordnung gemäß den nebengeordneten Ansprüchen gelöst.

Weitere vorteilhafte Ausgestaltungen der vorliegenden Erfindung sind in den abhängigen Ansprüchen angegeben.

Gemäß einem ersten Aspekt ist ein elektrisch leitendes Anschlusselement für ein Durchführungsbauelement, insbesondere für einen Durchführungskondensator, vorgesehen. Das Anschlusselement umfasst:
- einen ersten Abschnitt zum Herstellen einer elektrischen Verbindung mit einer Zuleitung;
- einen zweiten Abschnitt, der mit dem ersten Abschnitt verbunden ist und zur Aufnahme des Durchführungsbauelements ausgebildet ist, wobei der zweite Abschnitt einen bezüglich der Anordnungsrichtung des ersten und des zweiten Abschnitts einen sich ändernden Querschnitt aufweist, um mechanische Spannungen auf das Durchführungsbauelement zu verhindern, wenn dieses mit einer Innenumfangsfläche um den zweiten Abschnitt anliegt.

Eine Idee des obigen Anschlusselements besteht darin, eine Verbindung zwischen einer Zuleitung und einem Durchführungsbauelement zu erreichen. Das Anschlusselement umfasst einen ersten Abschnitt zum Bereitstellen eines elektrischen Kontakts und zum Herstellen einer elektrischen Verbindung mit oder zu einer Zuleitung. Ein zweiter Abschnitt des Anschlusselements definiert einen Außendurchmesser, der auch bei Einwirken von Temperaturänderungen auf den Durchführungskondensator und/oder das Anschlusselement keine unzulässige (tangentiale / radialen) Zugspannung auf den Durchführungskondensator ausübt. Dies kann beispielsweise durch Formgebung und/oder Materialauswahl des zweiten Abschnitts des Anschlusselements erreicht werden, die sich variabel an einen sich ändernden Innendurchmesser des Durchführungsbauelements anpassen kann.

Weiterhin kann der erste Abschnitt hülsenförmig ausgebildet sein, um die Zuleitung aufzunehmen und/oder wobei der zweite Abschnitt hülsenförmig ausgebildet ist, um eine elastische Verformung quer zur Anordnungsrichtung zu ermöglichen.

Gemäß einer Ausführungsform kann der zweite Abschnitt konusförmig ausgebildet sein.

Es kann vorgesehen sein, dass der zweite Abschnitt einen elastisch verformbaren Außenumfang aufweist. Insbesondere kann der zweite Abschnitt Ausnehmungen aufweisen, so dass sich in axialer Richtung des Anschlusselements Vorsprünge erstrecken.

Weiterhin kann der zweite Abschnitt einen sich in axialer Richtung erstreckenden Schlitz aufweisen.

Es kann vorgesehen sein, dass der zweite Abschnitt in Umfangsrichtung eine wellenförmige Kontur aufweist.

Gemäß einem weiteren Aspekt ist eine Anordnung vorgesehen, die ein ringförmiges Durchführungsbauelement und das obige Anschlusselement umfasst, wobei das Durchführungsbauelement auf den zweiten Abschnitt des Anschlusselements aufgesetzt ist, so dass der zweite Abschnitt elastisch verformt ist und an einer Innenumfangsfläche des Durchführungsbauelements anliegt.

Gemäß einem weiteren Aspekt ist eine Anordnung vorgesehen, die ein ringförmiges Durchführungsbauelement und das obige Anschlusselement umfasst, wobei das Durchführungsbauelement auf den zweiten Abschnitt des Anschlusselementes aufgesetzt ist, wobei die thermischen Ausdehnungskoeffizienten des zweiten Abschnitts und des Durchführungsbauelements gleich sind.

Gemäß einem weiteren Aspekt ist eine Vorrichtung vorgesehen, die eine der obigen Anordnungen und eine Kontakteinrichtung zum Kontaktieren einer an einer Außenumfangsfläche des Durchführungsbauelements angeordneten Kontaktfläche umfasst.

Gemäß einem weiteren Aspekt ist eine Verbindungsanordnung zum Herstellen einer elektrischen Verbindung vorgesehen. Die Verbindungsanordnung umfasst:
- das obige Anschlusselement; und
- ein Durchführungsbauelement mit einer konisch geformten Innenumfangsfläche, wobei ein Kegelhalbwinkel der Innenumfangsfläche dem Kegelhalbwinkel des zweiten Abschnitts des Anschlusselements entspricht und das Durchführungsbauelement auf den zweiten Abschnitt des Anschlusselements aufgesetzt ist.

Eine Idee der obigen Verbindungsanordnung besteht darin, ein Kontaktierungselement für eine Zuleitung in eine elektronische Baugruppe zur Verfügung zu stellen, durch das sowohl die Kontaktierung zu der Zuleitung als auch die Kontaktierung zu dem Gehäuse bzw. einem Abschirmungselement über die Außenfläche des Durchführungsbauelements zuverlässig gewährleistet werden kann. Eine zuverlässige Kontaktierung wird durch die konische Ausführung der Kontaktfläche des Durchführungsbauelements und des zweiten Abschnitts des Anschlusselements erreicht. Die konische Ausgestaltung ermöglicht darüber hinaus auch eine Toleranz gegenüber thermischen Spannungen.

Weiterhin kann eine Außenhülse vorgesehen sein, die mit einem Kontaktabschnitt an einer Außenumfangsfläche des Durchführungsbauelements anliegt, wobei insbesondere eine Innenfläche des Kontaktabschnitts und die Außenumfangsfläche des Durchführungsbauelements konisch geformt sind und jeweils den gleichen Kegelhalbwinkel aufweisen.

Insbesondere können das Anschlusselement und die Außenhülse von einem Isolationsmantel umgeben sein, so dass das Anschlusselement und die Außenhülse miteinander verbunden sind.

Weiterhin kann das Anschlusselement eine Zuleitungsaufnahme zum Aufnehmen einer Zuleitung aufweisen.

Gemäß einem weiteren Aspekt ist eine Verwendung des obigen Anschlusselements zum Kontaktieren einer an einer Innenumfangsfläche eines ringförmigen Durchführungsbauelements angeordneten Kontaktfläche vorgesehen.

### Kurzbeschreibung der Zeichnungen

Bevorzugte Ausführungsformen der vorliegenden Erfindung werden nachfolgend anhand der beigefügten Zeichnungen näher erläutert. Es zeigen:
- Figur 1: eine Explosionsdarstellung eines Elektromotors mit abgehobenem Gehäusedeckel zur Aufnahme von über Durchführungskondensatoren zugeführten Zuführungsleitungen;
- Figur 2: eine schematische Darstellung zur Kontaktierung eines Innenkontakts eines Durchführungskondensators;
- Figuren 3a - 3c: verschiedene konstruktive Ausgestaltungen der Kontaktierung des Innenkontakts des Durchführungskondensators mit reduzierter Zugspannung;
- Figur 4: mögliche Ausgestaltung einer Kontaktierung eines Außenkontakts des Durchführungskondensators;
- Figur 5: eine weitere Ausführungsform zur Kontaktierung des Außenkontakts des Durchführungskondensators; und
- Figur 6: eine Querschnittsdarstellung durch ein Verbindungselement mit einem integrierten Durchführungskondensator.

### Beschreibung von Ausführungsformen

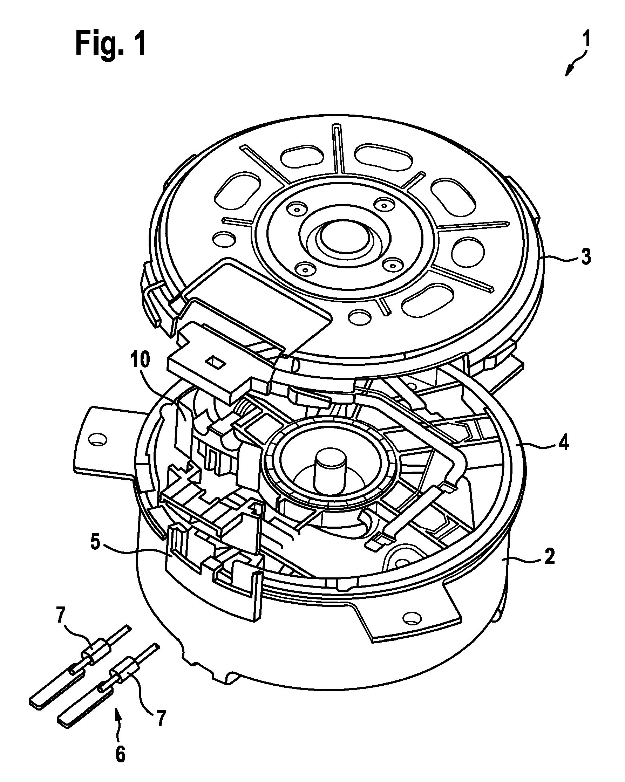

Figur 1 zeigt eine Explosionsdarstellung eines Elektromotors 1 mit einem Gehäuse 2, einem Gehäusedeckel 3 und einen zwischen dem zylinderförmigen Gehäuse 2 und dem Gehäusedeckel 3 angeordneten Bürstenhalter 4. Der Bürstenhalter 4 weist einen Anschlussbereich 5 auf, an dem bzw. durch den Zuleitungen 6 in das Innere des Elektromotors 1 geführt werden. Um eine elektromagnetische Entstörung vorzusehen, können an den Zuleitungen 6 Durchführungsbauelemente 7 in Form von Durchführungskondensatoren oder dergleichen vorgesehen sein, die eine kapazitive Verbindung zwischen der entsprechenden Zuleitung und dem Gehäuse 2 der elektrischen Maschine 1 schaffen.

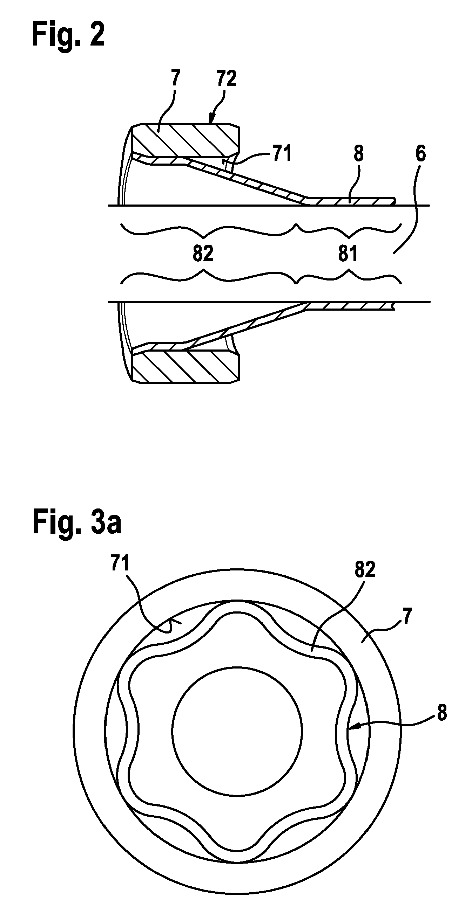

Wie in Figur 2 detaillierter dargestellt, ist der Durchführungskondensator 7 ein im Wesentlichen ringförmig (torusförmig) aufgebauter Keramikkondensator mit einer Innenumfangsfläche 71, die einen Innenkontakt bildet, und einer Außenumfangsfläche 72, die einen Außenkontakt bildet. Der Durchführungskondensator 7 ist aufgrund seines Keramikkörpers in der Regel sehr empfindlich gegenüber thermischen Spannungen. Insbesondere bei der Montage des Elektromotors 1 kommt es aufgrund von Löt-, Schweiß- oder sonstigen Prozessen zur thermischen Ausdehnung der Zuleitung, die durch den Durchführungskondensator 7 geführt ist. Da zur elektrischen Kontaktierung des Innenkontakts die Zuleitungen 6 in direktem Kontakt zu dem Durchführungskondensator 7 stehen, wirkt die durch die Erwärmung bewirkte Dickenänderung der Zuleitungen 6 unmittelbar auf den Keramikkörper des Durchführungskondensators 7 und bewirkt dadurch eine Zugspannung in Umfangsrichtung, die bereits bei moderaten Temperaturänderungen einen zulässigen Wert überschreiten kann.

Daher ist vorgesehen, wie beispielsweise in Figur 2 dargestellt, einen direkten Kontakt zwischen der Zuleitung 6 und dem Innenkontakt des Durchführungskondensators 7 zu vermeiden und stattdessen ein zwei- oder mehrteiliges hülsenförmiges Anschlusselement 8 vorzusehen, das in einem ersten Abschnitt 81 einen Innendurchmesser aufweist, der im Wesentlichen dem Außendurchmesser der Zuleitung 6 entspricht. Dadurch kann die Zuleitung 6 in den ersten Abschnitt 81 des Anschlusselements 8 eingeschoben werden und es kann durch einfache Maßnahmen wie Löten, Schweißen oder Verklemmen ein elektrischer Kontakt zwischen dem ersten Abschnitt 81 des hülsenförmigen Anschlusselements 8 und der Zuleitung 6 erreicht werden.

Das Anschlusselement 8 weist weiterhin einen zweiten Abschnitt 82 auf, der einen Durchmesser aufweist, der im Wesentlichen über dem Durchmesser des ersten Abschnitts 81 verbreitert ist. Der zweite Abschnitt 82 ist so ausgestaltet, dass zumindest bereichsweise eine Kontaktierung des Innenkontakts bzw. der Innenumfangsfläche des Durchführungskondensators 7 erreicht wird und weiterhin eine elastische Anpassung der Stellen, an denen der zweite Abschnitt 82 mit dem Innenkontakt des Durchführungskondensators 7 in Kontakt kommt, gewährleistet wird. Der zweite Abschnitt 82 kann in axialer Richtung sich radial erweiternd ausgebildet sein. Die elastische Anpassung kann, wie in den Querschnittsdarstellungen der Anschlusselemente 8 der Figuren 3a bis 3c gezeigt, durch verschiedene Ausgestaltungen des zweiten Abschnitts 82 vorgesehen werden.

Wie in Figur 3a dargestellt ist, kann der zweite Abschnitt 82 entlang seines Außenumfangs eine Wellenform aufweisen, die beispielsweise sinusförmig oder sägezahnförmig sein kann, so dass nur die Bereiche mit dem größten Abstand von der Mittenachse des Anschlusselements 8 mit dem Innenkontakt des Durchführungskondensators 7 in Kontakt kommen. Die wellenförmige Ausbildung kann entlang einer axialen Richtung mit sich vergrößerndem Durchmesser vorgesehen sein, um beim Aufsetzen des Durchführungskondensators 7 eine zuverlässige Kontaktierung zu erreichen.

Bei einer Veränderung des Durchmessers des Innenkontakts des Durchführungskondensators 7 aufgrund thermischer Einflüsse kann der zweite Abschnitt 82 eine Verringerung des Durchmessers des Innenkontakts ausgleichen oder, wenn der zweite Abschnitt 82 zuvor unter einer leichten Vorspannung in den Durchführungskondensator 7 eingesetzt worden ist, eine Erweiterung des Innendurchmessers des Durchführungskondensators 7 ausgleichen, so dass eine zuverlässige elektrische Kontaktierung stets gewährleistet ist.

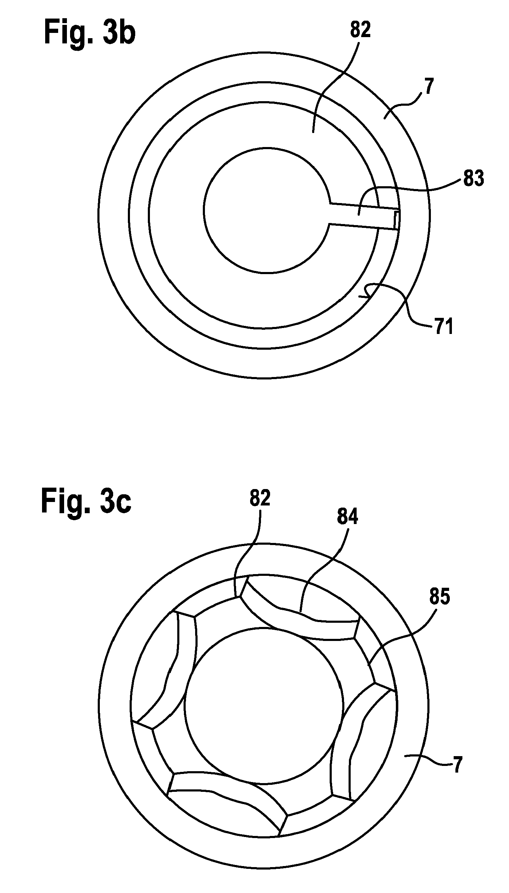

Gemäß einer weiteren Ausführungsform, wie sie beispielsweise in Figur 3b gezeigt ist, kann der zweite Abschnitt 82 in achsparalleler Richtung mit einem Schlitz 83 geschlitzt sein, so dass ebenfalls eine Anpassung an einen sich verändernden Innendurchmesser des Durchführungskondensators 7 gewährleistet ist.

Gemäß einer weiteren Ausführungsform, die in Figur 3c dargestellt ist, kann der zweite Abschnitt 82 in Umfangsrichtung Bereiche mit Ausnehmungen 84 aufweisen, so dass lediglich den Außenumfang des zweiten Abschnitts 82 definierende, in axialer Richtung vorstehende Vorsprünge 85 verbleiben. Die Vorsprünge 85 sind vorzugsweise so geformt, dass sie sich nach außen hin, d. h. in einer axialen Richtung, erweitern. Dadurch ermöglichen sie aufgrund ihrer Eigenelastizität eine Anpassung an einen sich aufgrund thermischer Ausdehnung ändernden Innendurchmesser des Durchführungskondensators 7, ohne dass die eigene thermische Ausdehnung des zweiten Abschnitts 82 des Anschlusselementes 8 eine kritische Spannung auf den Durchführungskondensator 7 ausüben kann.

Gemäß einer weiteren Ausführungsform kann das Material des Anschlusselements 8 in geeigneter Weise ausgewählt sein, insbesondere kann der zweite Abschnitt 82 des Anschlusselements 8 aus einem Material gefertigt sein, dessen Wärmeausdehnungskoeffizient dem des Durchführungskondensators 7 entspricht. Somit können thermische Spannungen zwischen dem zweiten Abschnitt 82 des Anschlusselements 8 und dem Durchführungskondensator 7 nicht auftreten.

Wie in Figur 1 dargestellt, werden die Außenkontakte der Durchführungskondensatoren 7 über eine Kontakteinrichtung 10, die auch als Abschirmelement dient, elektrisch kontaktiert. Die Kontakteinrichtung 10 stellt den Kontakt zwischen dem Außenkontakt des Durchführungskondensators 7 und dem Gehäuse 2 des Elektromotors 1 her.

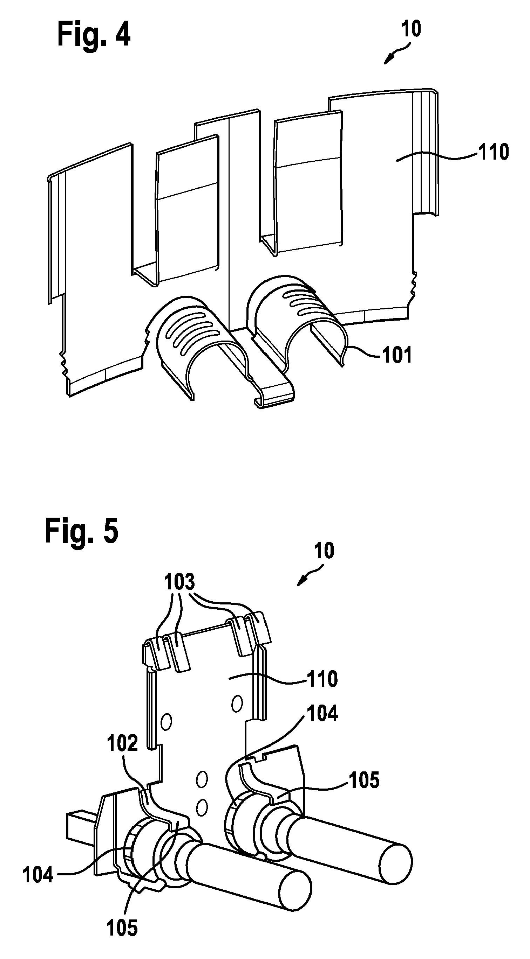

Eine Ausführungsform der Kontakteinrichtung 10 ist in Figur 4 ausführlicher dargestellt und weist hülsenförmig gebogene Blechabschnitte 101 auf, die einen Innendurchmesser definieren, der etwas geringer ist als der Außendurchmesser der Durchführungskondensatoren 7. Die Blechabschnitte stehen im Wesentlichen senkrecht von einem Trägerelement 110 ab

Ferner weisen die hülsenförmig gebogenen Blechabschnitte 101 elastische Eigenschaften auf. Beim Einsetzen der Durchführungskondensatoren 7 in die hülsenförmig gebogenen Blechabschnitte 101 der Kontakteinrichtung 10 werden die Außenkontakte der Durchführungskondensatoren 7 durch die Federkraft der hülsenförmig gebogenen Blechabschnitte zuverlässig kontaktiert. Änderungen des Außendurchmessers der Durchführungskondensatoren 7 können aufgrund der elastischen Eigenschaften des Materials der Kontakteinrichtung 10, z.B. Blech, ausgeglichen werden.

Figur 5 zeigt eine weitere Ausführungsform zur Kontaktierung der Durchführungskondensatoren 7, wobei federelastische Haken 103 an dem Trägerelement 110 der Kontakteinrichtung 10 angeformt sind, die beim Aufstecken der Kontakteinrichtung 10 auf das Gehäuse 2 des Elektromotors 1 verformt werden und unter bleibender mechanischer Spannung mit diesem verbunden werden.

Die Kontakteinrichtung 10 weist weiterhin L-förmige Haken 102 auf, die eine Durchgangsöffnung 104 umgeben. Die L-förmigen Haken 102 stehen im Wesentlichen senkrecht von dem Trägerelement 110 ab und bilden einen Aufnahmebereich für den Durchführungskondensator 7, wobei abstehende Schenkel der L-förmigen Haken aufeinander zu gerichtet sind, um einen axialen Anschlag für eine Seitenfläche des Keramikkörpers des Durchführungskondensators 7 zu bilden.

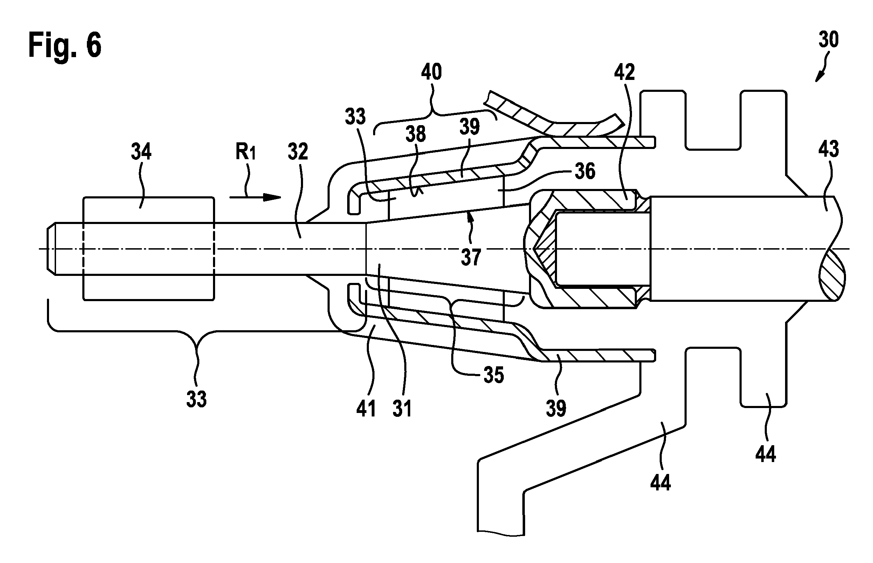

In Figur 6 ist eine schematische Querschnittsdarstellung einer Verbindungsanordnung 30 zum Vorsehen einer Kontaktierung eines Durchführungskondensators 7 an einer Zuleitung 6 zu einer elektrischen Baugruppe dargestellt. Die Anordnung 30 der Figur 6 sieht ein elektrisch leitendes Kontaktelement 32 als Anschlusselement vor, das eine ähnliche Form aufweist, wie das zuvor beschriebene Anschlusselement 8.

Das Kontaktelement 32 weist einen zylindrischen ersten Abschnitt 33 auf, der zum Kontaktieren der Verbindungsanordnung dient. Der erste Abschnitt 33 kann mit einem Leiterstreifen 34 versehen sein, um eine elektrische Kontaktierung zu erleichtern.

Das Kontaktelement 32 weist einen konusförmigen zweiten Abschnitt 35 auf, der sich an den ersten Abschnitt 33 anschließt. Der konusförmige zweite Abschnitt 35 dient zum Herstellen einer elektrischen Verbindung zwischen dem Kontaktelement 32 und einem Durchführungskondensator 36. Durch die Konusform des zweiten Abschnitts 35 stellt das Kontaktelement 32 verschiedene Außendurchmesser zur Verfügung und bietet dadurch gleichzeitig auch einen axialen Anschlag für den Durchführungskondensator.

Der Durchführungskondensator 36, insbesondere die Ausbildung dessen Innenumfangsfläche, ist im Wesentlichen an die Konusform des zweiten Abschnitts 35 des Kontaktelements 32 angepasst. Der Durchführungskondensator 36 weist dazu ebenfalls einen konusförmigen Innenkontakt 37 mit einem Winkel zur axialen Richtung auf, der dem entsprechenden Konuswinkel des zweiten Abschnitts 35 entspricht.

Der Durchführungskondensator 36 weist weiterhin eine konusförmige Außenumfangsfläche als Außenkontakt 38 auf, dessen Schrägungen gleichgerichtet sind. Der Außenkontakt 38 und der Innenkontakt 37 können im Wesentlichen parallel verlaufen. Zum Kontaktieren des Außenkontakts 38 des Durchführungskondensators 36 ist eine elektrisch leitende Außenhülse 39 vorgesehen, die in einem Kontaktabschnitt 40 eine dem Außenumfang des Durchführungskondensators 36 entsprechende Konusform hat. Auf diese Weise kann der Durchführungskondensator 36 durch einen Zug in axialer Richtung zwischen dem Kontaktelement 32 und der Außenhülse 39 zwischen der Außenfläche des zweiten Abschnitts 35 des Kontaktelements 32 und der Innenfläche des Kontaktabschnitts 40 der Außenhülse 39 verklemmt werden und eine zuverlässige elektrische Kontaktierung gewährleisten.

Die Montage einer solchen Anordnung erfolgt durch Auffädeln des Durchführungskondensators 36 entlang einer Richtung R1 über den ersten Abschnitt 33 des Kontaktelementes 32 in Richtung des zweiten Abschnitts 35 und durch Aufbringen der Außenhülse 39 in gleicher Richtung, bis der Durchführungskondensator 36 zwischen dem Kontaktelement 32 und der Außenhülse 39 verklemmt ist.

Um ein späteres Ablösen des Kontaktelements 32 bzw. der Außenhülse 39 von dem Durchführungskondensator 36 zu vermeiden, sind vorzugsweise Kegelhalbwinkel der Konusform des zweiten Abschnitts 35 des Kontaktelements 32 und des Kontaktabschnitts 40 der Außenhülse 39 von weniger als 5° vorgesehen, so dass eine Verschiebung durch Selbsthemmung ausgeschlossen werden kann.

Durch das Verklemmen des Durchführungskondensators 36 zwischen dem Kontaktelement 32 und der Außenhülse 39 können thermische Spannungen reduziert werden, da diese je nachdem, an welcher Stelle die Temperaturänderung auftritt, entweder durch das Kontaktelement 32 oder durch die Außenhülse 39 abgefangen werden.

An dem ersten Abschnitt 33 gegenüberliegenden Ende des Kontaktelements 32 kann eine Zuleitungsaufnahme 42 mit einer Ausnehmung vorgesehen sein, in die eine zu kontaktierende Zuleitung 43 eingeschoben werden kann. Die Zuleitung 43 kann durch geeignete Verbindungsverfahren mit der Zuleitungsaufnahme 42 verbunden werden, z. B. durch Löten, Schweißen, Crimpen oder dergleichen.

Es kann weiterhin vorgesehen sein, dass die Verbindungsanordnung 30 mit dem Kontaktelement 32 und der Außenhülse 39 in ein Kunststoffmaterial eingegossen wird, um einen Isolationsmantel 41 zu bilden.

Die Außenhülse 39 kann Teil der Kontakteinrichtung 10 der Figur 5 sein, so dass die Verbindungsanordnung 30 auch das Kontaktelement 10 umfasst. Beim Umspritzen wird dadurch das Kontaktelement 10 fest mit dem Kontaktelement 32 und dem Durchführungskondensator 36 verbunden. Das Umspritzen kann weiterhin auch einen Abschnitt der Zuleitung 43 umfassen, so dass eine höhere Zugbelastbarkeit der Verbindungsanordnung 30, insbesondere zwischen dem Kontaktelement 32 und der Zuleitung 43, erreicht wird.

Es kann vorgesehen sein, dass beim Umspritzen weiterhin Positionierelemente zur definierten Anordnung am Elektromotor 1 und/oder Fixierelemente 44 zum Befestigen der Anordnung an dem Elektromotor 1 bereitgestellt werden können. Die Umspritzung kann weiterhin Strukturen, wie z.B. einen Knickschutz erhalten, durch die ein Abknicken der Zuleitung 43 an einem Ende der Verbindungsanordnung 30 vermieden werden kann.

Die Umspritzung gewährleistet weiterhin einen Schutz des Durchführungskondensators 36 vor externen Einflüssen, und bietet somit eine robuste Aufnahme, welche die Lebensdauer des Durchführungskondensators 36 deutlich erhöht.

## Patentansprüche

1. Elektrisch leitendes Anschlusselement (8, 32) für ein Durchführungsbauelement (7, 36), insbesondere für einen Durchführungskondensator, umfassend:
- einen ersten Abschnitt (33, 81) zum Herstellen einer elektrischen Verbindung mit einer Zuleitung (6); und
- einen zweiten Abschnitt (35, 82), der mit dem ersten Abschnitt (33, 81) verbunden ist und zur Aufnahme des Durchführungsbauelements (7) ausgebildet ist, wobei der zweite Abschnitt (35, 82) einen bezüglich der Anordnungsrichtung des ersten und des zweiten Abschnitts (35, 82) einen sich ändernden Querschnitt aufweist, um mechanische Spannungen auf das Durchführungsbauelement (7, 36) zu verhindern, wenn dieses mit einer Innenumfangsfläche um den zweiten Abschnitt (35, 82) anliegt.

2. Anschlusselement (8, 32) nach Anspruch 1, wobei der erste Abschnitt (33, 81) hülsenförmig ausgebildet ist, um die Zuleitung (6) aufzunehmen und/oder wobei der zweite Abschnitt (35, 82) hülsenförmig ausgebildet ist, um eine elastische Verformung quer zur Anordnungsrichtung zu ermöglichen.

3. Anschlusselement (8, 32) nach einem der Ansprüche 1 oder 2, wobei der zweite Abschnitt (35, 82) konusförmig ausgebildet ist.

4. Anschlusselement (8, 32) nach einem der Ansprüche 1 bis 3, wobei der zweite Abschnitt (35, 82) einen elastisch verformbaren Außenumfang aufweist.

5. Anschlusselement (8, 32) nach Anspruch 4, wobei der zweite Abschnitt (35, 82) Ausnehmungen aufweist, so dass sich in axialer Richtung des Anschlusselements (8, 32) Vorsprünge (85) erstrecken.

6. Anschlusselement (8, 32) nach Anspruch 4, wobei der zweite Abschnitt (35, 82) einen sich in axialer Richtung erstreckenden Schlitz (83) aufweist.

7. Anschlusselement (8, 32) nach Anspruch 4, wobei der zweite Abschnitt (82) in Umfangsrichtung eine wellenförmige Kontur aufweist.

8. Anordnung umfassend:
- ein insbesondere ringförmiges Durchführungsbauelement (7) ; und
- ein Anschlusselement (8) nach einem der Ansprüche 1 bis 6;
wobei das Durchführungsbauelement (7) auf den zweiten Abschnitt (82) des Anschlusselementes (8) aufgesetzt ist, so dass der zweite Abschnitt (82) elastisch verformt ist und an einer Innenumfangsfläche (71) des Durchführungsbauelements (7) anliegt.

9. Anordnung umfassend:
- ein insbesondere ringförmiges Durchführungsbauelement (7); und
- ein Anschlusselement (32) nach einem der Ansprüche 1 bis 6;
wobei das Durchführungsbauelement (36) auf den zweiten Abschnitt (35) des Anschlusselementes (8) aufgesetzt ist, wobei die thermischen Ausdehnungskoeffizienten des zweiten Abschnitts (35) und des Durchführungsbauelements (36) gleich sind.

10. Vorrichtung umfassend:
- eine Anordnung nach einem der Ansprüche 8 und 9; und
- eine Kontakteinrichtung (39) zum Kontaktieren einer an einer Außenumfangsfläche (38) des Durchführungsbauelements (36) angeordneten Kontaktfläche.

11. Verbindungsanordnung (30) zum Herstellen einer elektrischen Verbindung umfassend:
- ein Anschlusselement (32) nach einem der Ansprüche 1 bis 6; und
- ein Durchführungsbauelement (36) mit einer konisch geformten Innenumfangsfläche (37),
wobei ein Kegelhalbwinkel der Innenumfangsfläche (37) dem Kegelhalbwinkel des zweiten Abschnitts (35) des Anschlusselements (32) entspricht und das Durchführungsbauelement (36) auf den zweiten Abschnitt (35) des Anschlusselements (32) aufgesetzt ist.

12. Verbindungsanordnung (30) nach Anspruch 11, wobei eine Außenhülse (39) vorgesehen ist, die mit einem Kontaktabschnitt (40) an einer Außenumfangsfläche (38) des Durchführungsbauelements (36) anliegt, wobei insbesondere eine Innenfläche des Kontaktabschnitts (40) und die Außenumfangsfläche (38) des Durchführungsbauelements (36) konisch geformt sind und jeweils den gleichen Kegelhalbwinkel aufweisen.

13. Verbindungsanordnung (30) nach Anspruch 10 oder 11, wobei die das Anschlusselement und die Außenhülse (39) von einem Isolationsmantel (41) umgeben sind, so dass das Anschlusselement (32) und die Außenhülse (39) miteinander verbunden sind.

14. Verbindungsanordnung (30) nach einem der Ansprüche 10 bis 12, wobei das Anschlusselement (32) eine Zuleitungsaufnahme (42) zum Aufnehmen einer Zuleitung (43) aufweist.

15. Verwendung eines Anschlusselements nach einem der Ansprüche 1 bis 6 zum Kontaktieren einer an einer Innenumfangsfläche (37) eines insbesondere ringförmigen Durchführungsbauelements (36) angeordneten Kontaktfläche.
